# EUROPÄISCHE PATENTANMELDUNG

(11) **EP 3 584 436 A1**
(43) Veröffentlichungstag der Anmeldung: **25.12.2019**
(21) Anmeldenummer: 18178278.0
(22) Anmeldetag: 18.06.2018
(51) Int. Cl.: F03D 1/06

(54) **WINDENERGIEANLAGENROTORBLATT MIT DICKER UND DÜNNER HINTERKANTE**

(71) Anmelder: Nordex Energy GmbH, 22419 Hamburg (DE)
(72) Erfinder: Lindhorst, Klemens, 22765 Hamburg (DE)
(74) Vertreter: Hauck Patentanwaltspartnerschaft mbB

(57) **Zusammenfassung**

Windenergieanlagenrotorblatt mit einer Blattwurzel, einer Blattspitze, einer Profilnasenkante, einer Profilendkante, einer Druckseite und einer Saugseite, wobei eine Profilsehnenlänge des Windenergieanlagenrotorblatts an einer ersten Radiusposition ein globales Maximum aufweist und die Profilendkante in einem ersten Längsabschnitt des Windenergieanlagenrotorblatts als dicke Hinterkante und in einem zweiten Längsabschnitt des Windenergieanlagenrotorblatts als dünne Hinterkante ausgebildet ist, dadurch gekennzeichnet, dass die Profilsehnenlänge in einem von der ersten Radiusposition beabstandeten Übergangsbereich zwischen dem ersten Längsabschnitt und dem zweiten Längsabschnitt ein lokales Maximum aufweist.

## Beschreibung

Die Erfindung betrifft ein Windenergieanlagenrotorblatt mit einem ersten Längsabschnitt, in dem die Profilendkante als dicke Hinterkante und einem zweiten Längsabschnitt, in dem die Profilendkante als dünne Hinterkante ausgebildet ist.

Bei der Konstruktion von Windenergieanlagenrotorblättern müssen aerodynamische und strukturelle Anforderungen gleichermaßen erfüllt werden. Außerdem müssen unterschiedliche Randbedingungen eingehalten werden, beispielsweise maximale Abmessungen, die sich aus Transportbeschränkungen oder den Fertigungstechnologien ergeben. Vor diesem Hintergrund ist die Verwendung aerodynamischer Profile mit einer sogenannten dicken Hinterkante in einem inneren Längsabschnitt bekannt geworden. Die in diesem Längsabschnitt erforderliche Festigkeit kann am einfachsten bei einer großen absoluten Profildicke erzielt werden. Unter aerodynamischen Gesichtspunkten optimale Profile weisen dann jedoch eine sehr große absolute Profilsehnenlänge auf, was den Transport und die Fertigung erschwert und die auftretenden Lasten erhöht. Die Verwendung einer dicken Hinterkante schafft hier Abhilfe, denn sie führt zu einer Verkürzung der Profilsehnenlänge. Obwohl es bei Profilen mit dicker Hinterkante zu sogenannten Hinterkantenwirbeln kommen kann, wird insgesamt ein guter Kompromiss zwischen den aerodynamischen und strukturellen Eigenschaften erzielt.

In weiter außen gelegenen Längsabschnitten weisen bekannte Rotorblätter in der Regel eine dünne Hinterkante auf. Die damit erzielbaren, optimalen aerodynamischen Eigenschaften sind dort besonders wichtig. Zudem ist dort mit Blick auf die Festigkeit eine geringere Profildicke ausreichend, so dass aerodynamisch optimale Profile mit dünner Hinterkante keine übergroße Sehnenlänge erfordern. In der Regel weist die Hinterkante in dem inneren Längsabschnitt eine in Richtung zu der Blattspitze hin abnehmende Höhe auf, bis sie schließlich in die weiter außen realisierte, dünne Hinterkante übergeht.

Aus der Druckschrift EP 2 868 916 A1 ist ein Windenergieanlagenrotorblatt bekannt geworden, bei dem an einzelnen Längsabschnitten, in denen das aerodynamische Profil eine dünne Hinterkante aufweist, Profilsehnenverlängerungsbauteile befestigt sind.

Aus der Druckschrift EP 2 679 803 B1 ist ein Windenergieanlagenrotorblatt bekannt geworden, bei dem die Profilendkante in einem Längsabschnitt als dicke Hinterkante ausgebildet ist. Um einer Radialströmung entlang der dicken Hinterkante entgegenzuwirken, sind an der dicken Hinterkante Strömungsablenkungselemente angeordnet.

Aus der Druckschrift WO 2017/039666 A1 ist ein Windenergieanlagenrotorblatt bekannt geworden, das in einem Längsabschnitt eine abgerundete Profilendkante aufweist. Auf der Druckseite verläuft nahe der Profilendkante ein langgestrecktes Strömungsablenkungselement, das ähnlich wie eine Gurney-Klappe angeordnet ist.

Aus der Druckschrift WO 2010/013024 A2 ist ein Windenergieanlagenrotorblatt mit einem nahe der Blattwurzel montierten Anbauteil bekannt geworden. Das Anbauteil soll die aerodynamischen Eigenschaften des Windenergieanlagenrotorblatts verbessern, indem es die Profilsehnenlänge in einem Längsabschnitt nahe der Blattwurzel vergrößert.

Davon ausgehend ist es die Aufgabe der Erfindung, ein Windenergieanlagenrotorblatt zur Verfügung zu stellen, das in einem ersten Längsabschnitt eine dicke Hinterkante und in einem zweiten Längsabschnitt eine dünne Hinterkante aufweist und das verbesserte aerodynamische Eigenschaften hat.

Diese Aufgabe wird gelöst durch das Windenergieanlagenrotorblatt mit den Merkmalen des Anspruchs 1. Vorteilhafte Ausgestaltungen sind in den Unteransprüchen angegeben.

Das Windenergieanlagenrotorblatt hat eine Blattwurzel, eine Blattspitze, eine Profilnasenkante, eine Profilendkante, eine Druckseite und eine Saugseite, wobei eine Profilsehnenlänge des Windenergieanlagenrotorblatts an einer ersten Radiusposition ein globales Maximum aufweist und die Profilendkante in einem ersten Längsabschnitt des Windenergieanlagenrotorblatts als dicke Hinterkante und in einem zweiten Längsabschnitt des Windenergieanlagenrotorblatts als dünne Hinterkante ausgebildet ist, wobei die Profilsehnenlänge in einem von der ersten Radiusposition beabstandeten Übergangsbereich zwischen dem ersten Längsabschnitt und dem zweiten Längsabschnitt ein lokales Maximum aufweist.

Das Windenergieanlagenrotorblatt ist insbesondere für einen Rotor mit einer im Wesentlichen horizontalen Drehachse bestimmt. Der Rotor kann eine Rotornabe und zum Beispiel zwei oder drei der Windenergieanlagenrotorblätter aufweisen, die im Bereich der Blattwurzel mit der Rotornabe verbunden sind. Der Rotor kann in den Verbindungsbereichen jeweils ein Pitchlager aufweisen, so dass ein Blatteinstellwinkel der Windenergieanlagenrotorblätter verstellbar ist. Der Rotor kann für eine Windenergieanlage vorgesehen sein, die mit variabler Drehzahl betrieben wird. Das Windenergieanlagenrotorblatt kann eine Länge von 40 m oder mehr aufweisen, insbesondere von 50 m oder mehr, 60 m oder mehr oder 70 m oder mehr. Das Windenergieanlagenrotorblatt kann einteilig ausgebildet oder in mehrere Längsabschnitte geteilt sein. Im Bereich der Blattwurzel kann das Windenergieanlagenrotorblatt einen kreisförmigen Querschnitt aufweisen. In Richtung zu der Blattspitze hin kann der kreisförmige Querschnitt in ein aerodynamisches Profil übergehen.

Die Profilsehnenlänge des Windenergieanlagenrotorblatts, gemessen senkrecht zu einer Längsachse des Windenergieanlagenrotorblatts zwischen Profilnasenkante und Profilendkante, weist an einer ersten Radiusposition ein globales Maximum auf. Diese erste Radiusposition kann beispielsweise in einem Bereich von etwa 10 % bis etwa 25 % der Gesamtlänge des Windenergieanlagenrotorblatts, gemessen von der Blattwurzel an, angeordnet sein. Die maximale Profilsehnenlänge kann ausschließlich an der ersten Radiusposition oder in einem Längsabschnitt, der die erste Radiusposition einschließt, ausgebildet sein.

In einem ersten Längsabschnitt ist die Profilendkante als dicke Hinterkante ausgebildet. Damit ist gemeint, dass die Höhe der Profilendkante 5 % oder mehr der an der betreffenden Radiusposition gegebenen Profilsehnenlänge beträgt. Im zweiten Längsabschnitt ist die Profilendkante als dünne Hinterkante ausgebildet. Damit ist gemeint, dass die Höhe der Profilendkante weniger als 5 % der an der betreffenden Radiusposition vorliegenden Profilsehnenlänge beträgt. Die Höhe der dicken Hinterkante kann auch mindestens 10 %, mindestens 15 %, mindestens 20 % oder mindestens 30 % der jeweiligen Profilsehnenlänge betragen. Die Höhe der dünnen Hinterkante kann auch kleiner als 3 %, kleiner als 2 % oder kleiner als 1 % der jeweiligen Profilsehnenlänge sein.

Zwischen den beiden Längsabschnitten gibt es einen Übergangsbereich, in dem ein Übergang zwischen dicker Hinterkante und dünner Hinterkante stattfindet. Dieser Übergangsbereich erstreckt sich über einen Längsabschnitt des Windenergieanlagenrotorblatts, der zwischen dem ersten Längsabschnitt und dem zweiten Längsabschnitt angeordnet sein kann. Der Längsabschnitt des Übergangsbereichs kann an einem Ende unmittelbar an den ersten Längsabschnitt und an dem anderen Ende unmittelbar an den zweiten Längsabschnitt angrenzen. Der Längsabschnitt des Übergangsbereichs kann den ersten Längsabschnitt und/oder den zweiten Längsabschnitt jedoch auch ganz oder teilweise überlappen oder einen Abstand davon aufweisen. In dem Übergangsbereich weist die Profilsehnenlänge ein lokales Maximum auf. Damit ist gemeint, dass die Profilsehnenlänge ausgehend von einer Position oder einem Längsabschnitt, an der bzw. in dem sie ihr lokales Maximum aufweist, sowohl in Richtung zur Blattwurzel als auch in Richtung zur Blattspitze hin abnimmt. Dabei ist das lokale Maximum in Längsrichtung des Windenergieanlagenrotorblatts von der ersten Radiusposition, an der die Profilsehnenlänge ihr globales Maximum erreicht, beabstandet.

Die Erfindung beruht auf der Erkenntnis, dass die in dem ersten Längsabschnitt aufgrund der dicken Hinterkante auftretenden Hinterkantenwirbel im Betrieb des Windenergieanlagenrotorblatts im Übergangsbereich zu dem zweiten Längsabschnitt mit einer dünnen Hinterkante Strömungsablösungen zur Folge haben können. Diese können dauerhaft oder auch nur kurzzeitig auftreten. In beiden Fällen verringern die Strömungsablösungen die aerodynamische Leistungsfähigkeit. Außerdem können sie zu einer zusätzlichen Geräuschentwicklung führen. Der Erfinder nimmt an, dass die auftretenden Strömungsablösungen in dem Übergangsbereich insbesondere von in radialer Richtung entlang der dicken Hinterkante in Richtung zur Blattspitze hin auftretenden Radialströmungen ausgelöst werden können.

Diesem Effekt wirkt die erfindungsgemäße Vergrößerung der Profilsehnenlänge in dem Übergangsbereich auf zweierlei Weise entgegen. Zum einen verringert sich (bei im Übergangsbereich unveränderter absoluter Profildicke) im Bereich des lokalen Maximums der Profilsehnenlänge die relative Profildicke. Dies kann Strömungsablösungen verhindern bzw. zu größeren Blattanstellwinkeln verschieben.

Zum anderen führt der veränderte Verlauf der Profilendkante in dem Übergangsbereich dazu, dass entlang der dicken Hinterkante zur Blattspitze hin verlaufende Radialströmungen in den Profilnachlauf abgeführt werden. Ihr Einfluss auf die entlang der Saugseite verlaufende Strömung kann dadurch verringert werden. Die Profilnasenkante kann in dem Übergangsbereich im Wesentlichen geradlinig verlaufen. Die Vergrößerung der Profilsehnenlänge an dem lokalen Maximum beruht demnach auf einem von einer geraden Linie abweichenden Verlauf der Profilendkante.

Insgesamt wird durch die erfindungsgemäße Ausgestaltung des Übergangsbereichs das Auftreten von Strömungsablösungen verhindert oder zumindest reduziert, sodass sich eine insgesamt bessere aerodynamische Leistungsfähigkeit ergibt. Die Strömung wird in dem Übergangsbereich stabilisiert.

In einer Ausgestaltung weist das Windenergieanlagenrotorblatt an jeder Radiusposition innerhalb des Übergangsbereichs ein aerodynamisches Profil auf. Insbesondere können die aerodynamischen Profile so gewählt sein, dass die von ihnen gebildeten Flächen ausgehend von jeder Radiusposition innerhalb des Übergangsbereichs zu einer benachbarten Radiusposition keine Sprünge oder Knicke aufweisen. Alle aerodynamisch wirksamen Flächen des Übergangsbereichs verlaufen in Längsrichtung des Rotorblatts stetig und stetig differenzierbar.

In einer Ausgestaltung weist die Profilendkante in dem Übergangsbereich einen geschwungenen Verlauf ohne Sprünge oder Knicke auf und schließt sich glatt an die Profilendkante des ersten Längsabschnitts und glatt an die Profilendkante des zweiten Längsabschnitts an. Diese Formgebung der Profilendkante kann zur Vermeidung von Strömungsablösungen beitragen.

In einer Ausgestaltung weist die Profilsehnenlänge zwischen dem globalen Maximum und dem lokalen Maximum ein lokales Minimum auf, wobei die Profilsehnenlänge an dem lokalen Maximum mindestens 1 % größer ist als an dem lokalen Minimum. Die Profilsehnenlänge an dem lokalen Maximum kann auch mindestens 2 %, mindestens 3 %, mindestens 5 % oder mindestens 10 % größer sein als an dem lokalen Minimum.

In einer Ausgestaltung nimmt eine Höhe der Profilendkante in dem Übergangsbereich in Richtung zur der Blattspitze hin monoton ab. Der Begriff "monoton abnehmen" wird ebenso wie die Begriffe "globales Maximum", "lokales Maximum", "lokales Minimum", "stetig" und "stetig differenzierbar" im mathematischen Sinn verwendet. Demnach nimmt die Höhe der Profilendkante in dem Übergangsbereich in Richtung zur Blattspitze hin stets entweder ab oder bleibt gleich. Insbesondere ist daran gedacht, dass die Höhe der Profilendkante zunächst streng monoton abnimmt, sich also kontinuierlich verringert, bis ein minimaler Wert erreicht ist, der dann im weiteren Verlauf in Richtung zur Blattspitze hin beibehalten wird. Dieser Wert kann der Höhe der dünnen Profilendkante entsprechen.

In einer Ausgestaltung wird das lokale Maximum der Profilsehnenlänge an einer zweiten Radiusposition erreicht. Die zweite Radiusposition befindet sich in einem Abstand von der ersten Radiusposition.

In einer Ausgestaltung ist die zweite Radiusposition in einer Mitte des Übergangsbereichs angeordnet. Das lokale Maximum kann sich dort ausschließlich an der zweiten Radiusposition befinden oder über einen bestimmten, innerhalb des Übergangsbereichs liegenden Längsabschnitt beibehalten werden.

In einer Ausgestaltung ist die zweite Radiusposition in einem Bereich von 30 % bis 60 % der Blattlänge, betrachtet von der Blattwurzel aus, angeordnet. Insbesondere kann sie sich in einem Bereich von 33 % bis 50 % der Blattlänge befinden.

In einer Ausgestaltung ist die Profilendkante an der zweiten Radiusposition als dünne Hinterkante ausgebildet. Der Übergang von dicker Hinterkante zu dünner Hinterkante ist in diesem Fall an der zweiten Radiusposition, also bei dem lokalen Maximum der Profilsehnenlänge, bereits abgeschlossen.

In einer Ausgestaltung verläuft die Profilendkante in dem ersten Längsabschnitt in Richtung der Profilhöhe im Wesentlichen geradlinig. Grundsätzlich kann die Profilendkante in Richtung der Profilhöhe auch eine Krümmung aufweisen, insbesondere eine konkave oder eine konvexe Krümmung. Ein geradliniger Verlauf kann fertigungstechnische Vorteile aufweisen, insbesondere in Verbindung mit einer Krümmung der Profilendkante in einer Längsrichtung des Windenergieanlagenrotorblatts.

In einer Ausgestaltung weist die Profilendkante in dem Übergangsbereich eine Krümmung in Längsrichtung des Windenergieanlagenrotorblatts auf, die dazu ausgebildet ist, eine Radialströmung, die entlang der Profilendkante in Richtung zu der Blattspitze hin strömt, in dem Übergangsbereich in einen Profilnachlauf umzuleiten. Dadurch wird Strömungsablösungen, die wie erläutert aufgrund der genannten Radialströmungen entstehen können, entgegengewirkt.

In einer Ausgestaltung setzt die Krümmung der Profilendkante die Profilendkante des ersten Längsabschnitts in Richtung zu der Blattspitze hin glatt fort. Mit "glatt fortsetzen" oder "sich glatt anschließen" ist jetzt wie im Folgenden gemeint, dass die von der Profilendkante gebildete Fläche an der betreffenden Stelle keinen Sprung und keinen Knick aufweist, im mathematischen Sinn also stetig und stetig differenzierbar ausgebildet ist.

In einer Ausgestaltung weist das Windenergieanlagenrotorblatt ein Hauptteil und ein Anbauteil auf, das in dem Übergangsbereich an dem Hauptteil befestigt ist und dort die Profilendkante bildet. Auf diese Weise ist insbesondere eine Nachrüstung herkömmlicher Windenergieanlagenrotorblätter ermöglicht. In diesem Fall entspricht das herkömmliche Windenergieanlagenrotorblatt dem Hauptteil mit dem ersten und dem zweiten Längsabschnitt. Durch das Anbauteil wird in dem Übergangsbereich zwischen dicker und dünner Hinterkante eine Vergrößerung der Profilsehnenlänge unter Ausbildung eines lokalen Maximums erzielt. Von der Bauweise mit Anbauteil können auch neue, speziell für diesen Zweck konstruierte Rotorblätter profitieren, weil das Hauptteil in gewohnter Weise gefertigt werden kann, ohne die in dem Übergangsbereich vergrößerte Profilsehnenlänge auszubilden. Das Anbauteil kann nach Fertigstellung des Hauptteils mit dem Hauptteil verbunden werden, insbesondere durch Verkleben. Wegen der relativ geringen Lasten, die auf das Anbauteil wirken, ist eine solche Fertigung einfach möglich.

In einer Ausgestaltung bilden eine erste Fläche des Hauptteils und eine erste Fläche des Anbauteils gemeinsam die Saugseite und/oder eine zweite Fläche des Hauptteils und eine zweite Fläche des Anbauteils bilden gemeinsam die Druckseite. Demnach trägt das Anbauteil in dem Übergangsbereich zu dem aerodynamisch wirksamen Profil des Windenergieanlagenrotorblatts bei.

In einer Ausgestaltung setzt die erste Fläche des Anbauteils die erste Fläche des Hauptteils in Richtung zu der Profilendkante hin glatt fort und/oder die zweite Fläche des Anbauteils setzt die zweite Fläche des Hauptteils in Richtung zu der Profilendkante hin glatt fort. Anschaulich gesprochen kann das Hauptteil dort, wo die Profilendkante als dicke Hinterkante ausgebildet ist, ein trunkiertes Profil aufweisen, also ein Profil, das ausgehend von einer aerodynamisch optimalen Form mit dünner Hinterkante im Bereich der Profilendkante abgeschnitten ist. Das Anbauteil ergänzt das trunkierte Profil um den bei der Trunkierung abgeschnittenen, profilendkantenseitigen Abschnitt oder einen Teil davon.

Nachfolgend wird die Erfindung anhand eines in Figuren dargestellten Ausführungsbeispiels näher erläutert. Es zeigen:
- Fig. 1: ein Windenergieanlagenrotorblatt aus dem Stand der Technik in einer perspektivischen Ansicht,
- Fig. 2: einen Ausschnitt einer perspektivischen Darstellung eines Windenergieanlagenrotorblatts mit einem Übergangsbereich,
- Fig. 3: ein Diagramm zum Verlauf der Profilsehnenlänge des Windenergieanlagenrotorblatts aus Figur 2,
- Fig. 4: ein Diagramm zum Verlauf der relativen Profildicke des Wind-energieanlagenrotorblatts aus Figur 2,
- Fig. 5: ein Diagramm der Blattkontur des Windenergieanlagenrotorblatts aus Figur 2,
- Fign. 6 bis 9: Querschnitte durch das aerodynamische Profil des Windenergie-anlagenrotorblatts aus Figur 2 an unterschiedlichen Radius-positionen im Übergangsbereich.

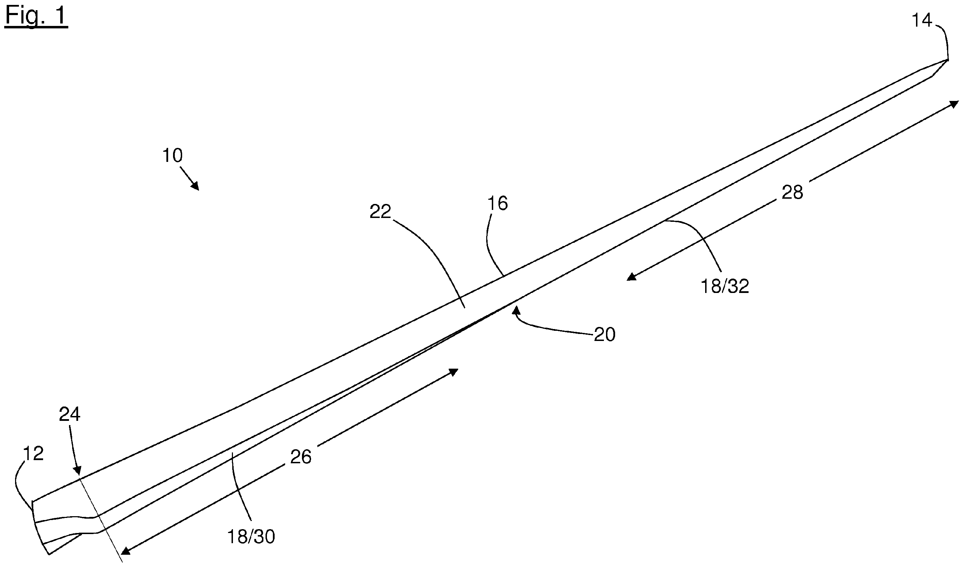

Das Windenergieanlagenrotorblatt 10 aus Fig. 1 hat eine Blattwurzel 12, eine Blattspitze 14, eine Profilnasenkante 16, eine Profilendkante 18, eine Druckseite 20 eine Saugseite 22. Die Profilnasenkante 16 und die Druckseite 20 befinden sich in der Darstellung der Figur 1 an der vom Betrachter abgewandten Seite.

An einer ersten Radiusposition 24 weist das Windenergieanlagenrotorblatt 10 seine maximale Profilsehnenlänge (globales Maximum) auf. In einem ersten Längsabschnitt 26 ist die Profilendkante 18 als dicke Hinterkante 30 ausgebildet. Der erste Längsabschnitt 26 erstreckt sich im Beispiel etwa von der ersten Radiusposition 24 bis zu einer weiter außen gelegenen Radiusposition ungefähr in der Mitte des Windenergieanlagenrotorblatts 10. In dem ersten Längsabschnitt 26 weist die dicke Hinterkante 30 eine Höhe von 5% oder mehr der jeweiligen Profilsehnenlänge auf.

Ein zweiter Längsabschnitt 28 erstreckt sich etwa über die äußere Hälfte des Windenergieanlagenrotorblatts 10. Dort ist die Profilendkante 18 als dünne Hinterkante 32 ausgebildet. Die dünne Hinterkante 32 weist eine Höhe auf, die kleiner ist als 5% der jeweiligen Profilsehnenlänge.

Der Querschnitt des Windenergieanlagenrotorblatts 10 ist an der Blattwurzel 12 kreisförmig und geht von dort in Richtung zur Blattspitze 14 hin schnell in ein aerodynamisches Profil mit einer dicken Hinterkante 30 über. Im weiteren Verlauf verringert sich die Höhe der dicken Hinterkante 30 kontinuierlich und geht schließlich in die dünne Hinterkante 32 über. Man erkennt in der Figur 1, dass die Profilendkante 18 in einem Übergangsbereich zwischen dem ersten Längsabschnitt 26 und dem zweiten Längsabschnitt 28 im Wesentlichen geradlinig verläuft, ebenso wie die Profilnasenkante 16 in diesem Bereich.

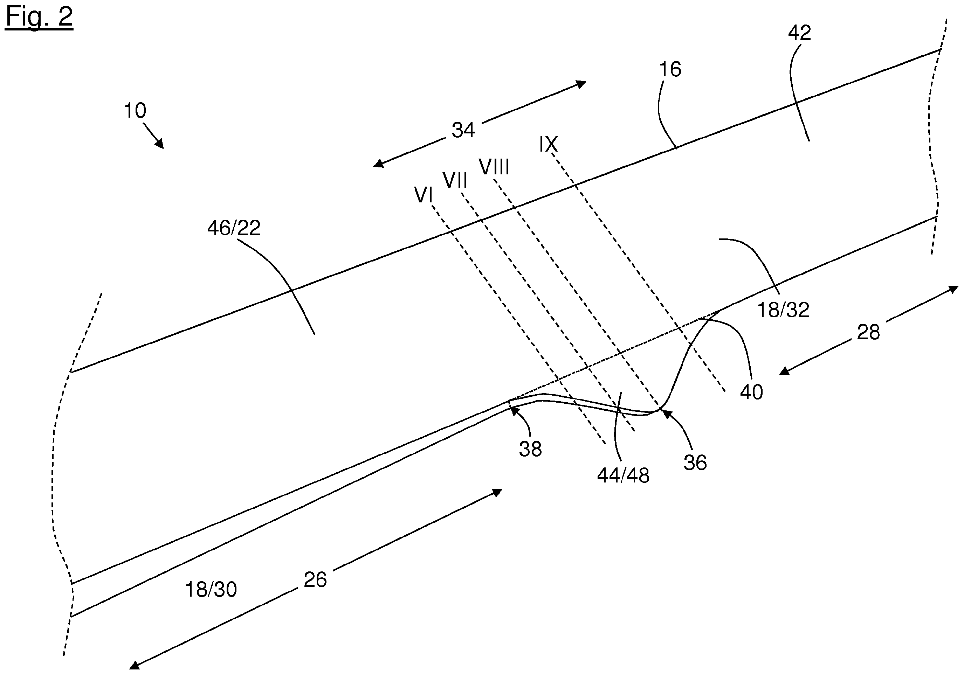

Das in Fig. 2 in einem vergrößerten Ausschnitt dargestellte Windenergieanlagenrotorblatt 10 unterscheidet sich von demjenigen aus Fig. 1 ausschließlich durch den erfindungsgemäß ausgestalteten Übergangsbereich 34. Die in der Figur 2 nicht dargestellten Bereiche sind gemäß Figur 1 ausgebildet. Man erkennt, dass die Profilendkante 18 ausgehend von dem ersten Längsabschnitt 26 in Richtung zur Blattspitze 14 hin (in Fig. 2 rechts außerhalb des dargestellten Ausschnitts) in Längsrichtung des Windenergieanlagenrotorblatts eine Krümmung aufweist, wodurch sich die Profilsehnenlänge in dem Übergangsbereich 34 vergrößert, bis sie an einer zweiten Radiusposition 36 ein lokales Maximum erreicht. Zwischen dem globalen Maximum an der ersten Radiusposition 24 (in Figur 2 links außerhalb des dargestellten Ausschnitts) und der zweiten Radiusposition 36 mit dem lokalen Maximum weist die Profilsehnenlänge an der dritten Radiusposition 38 ein lokales Minimum auf. Von der zweiten Radiusposition 36 weiter in Richtung zur Blattspitze 14 hin nimmt die Profilsehnenlänge in dem Übergangsbereich 34 wieder ab, bis die Profilendkante 18 im Bereich des zweiten Längsabschnitts 28 ihrem in der Figur 1 dargestellten, im Wesentlichen geradlinigen Verlauf bis nahe an die Blattspitze 14 heran folgt.

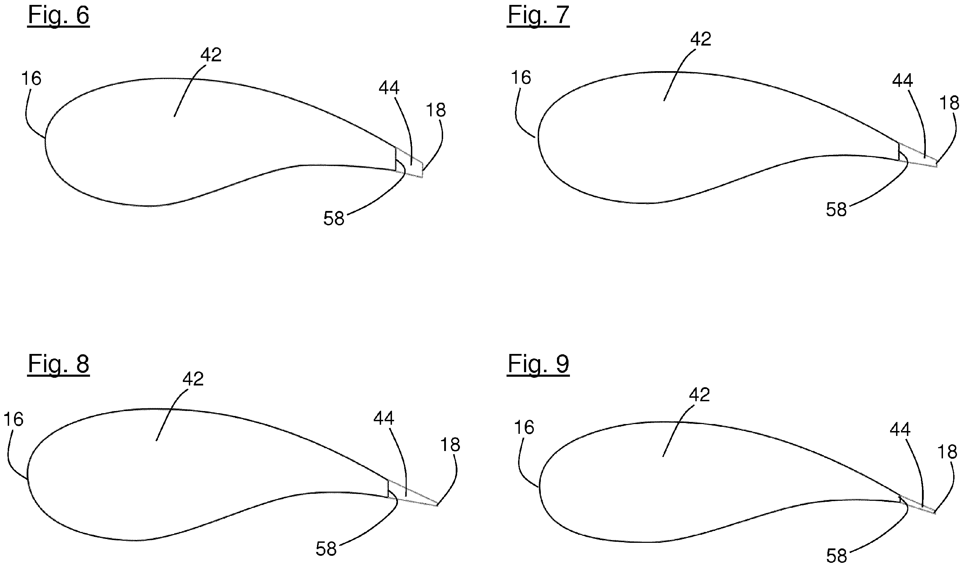

In der Fig. 2 ist durch die punktierte Linie 40 angedeutet, dass das Windenergieanlagenrotorblatt 10 aus einem Hauptteil 42 und einem Anbauteil 44 zusammengefügt ist. Die Geometrie des Hauptteils 42 entspricht dem Windenergieanlagenrotorblatt aus Fig. 1 mit in dem Übergangsbereich 34 im Wesentlichen geradlinig verlaufender Profilendkante 18. Das Anbauteil 44 ist an eine Hinterkante 58 (siehe Fign. 6 bis 9) des Hauptteils 42 in dem Übergangsbereich 34 angesetzt und erstreckt sich von dort aus bis zu der gekrümmt verlaufenden Profilendkante 18 des Windenergieanlagenrotorblatts 10. Demnach wird die Profilendkante 18 in dem Übergangsbereich 34 von dem Anbauteil 44 gebildet. Man erkennt in Figur 2, dass die Saugseite 22 des Windenergieanlagenrotorblatts von einer ersten Fläche 46 des Hauptteils 42 und einer ersten Fläche 48 des Anbauteils 44 gebildet wird, wobei die erste Fläche 48 des Anbauteils 44 die erste Fläche 46 des Hauptteils 42 in Richtung zu der Profilendkante 18 hin glatt fortsetzt. Entsprechend ausgebildete zweite Flächen gibt es auf den vom Betrachter abgewandten Seiten des Hauptteils 42 und des Anbauteils 44. Diese bilden gemeinsam die Druckseite 20 des Windenergieanlagenrotorblatts 10.

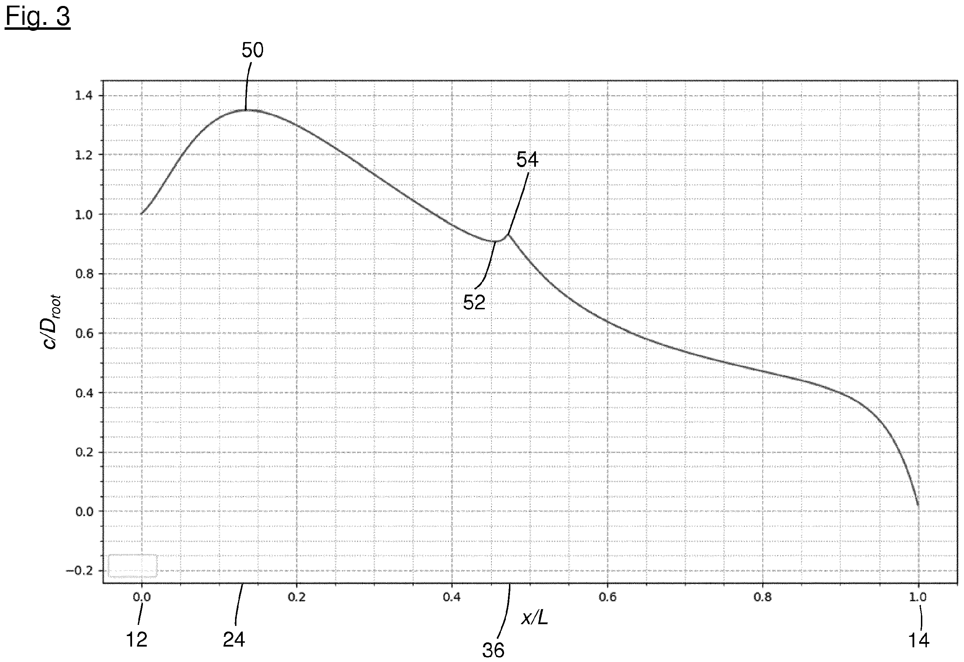

Figur 3 zeigt den Verlauf der Profilsehnenlänge c des Windenergieanlagenrotorblatts 10 aus Figur 2 bezogen auf den Durchmesser *Dᵣₒₒₜ* des Windenergieanlagenrotorblatts 10 an der Blattwurzel 12. Die Profilsehnenlänge c ist in dem Diagramm aufgetragen über die Länge x des Windenergieanlagenrotorblatts 10 bezogen auf dessen Gesamtlänge *L.* Der Wert *x*/*L =* 0,0 entspricht daher der Blattwurzel 12 und der Wert *x*/*L* = 1,0 der Blattspitze 14. Man erkennt in dem Diagramm, dass die Profilsehnenlänge c etwa bei *x*/*L =* 0,16 ein globales Maximum 50 aufweist, das etwa das 1,35fache des Durchmessers *Dᵣₒₒₜ* beträgt. Dieses befindet sich an der ersten Radiusposition 24. Von dort in Richtung zur Blattwurzel 14 hin nimmt die Profilsehnenlänge c zunächst ab, bis sie an der dritten Radiusposition 38, etwa bei *x*/*L =* 0,45, ein lokales Minimum 52 erreicht. Weiter außerhalb davon weist die Profilsehnenlänge c an der zweiten Radiusposition 36 ein lokales Maximum 54 auf. Von dort weiter in Richtung zur Blattspitze 14 hin nimmt die Profilsehnenlänge c dann kontinuierlich ab.

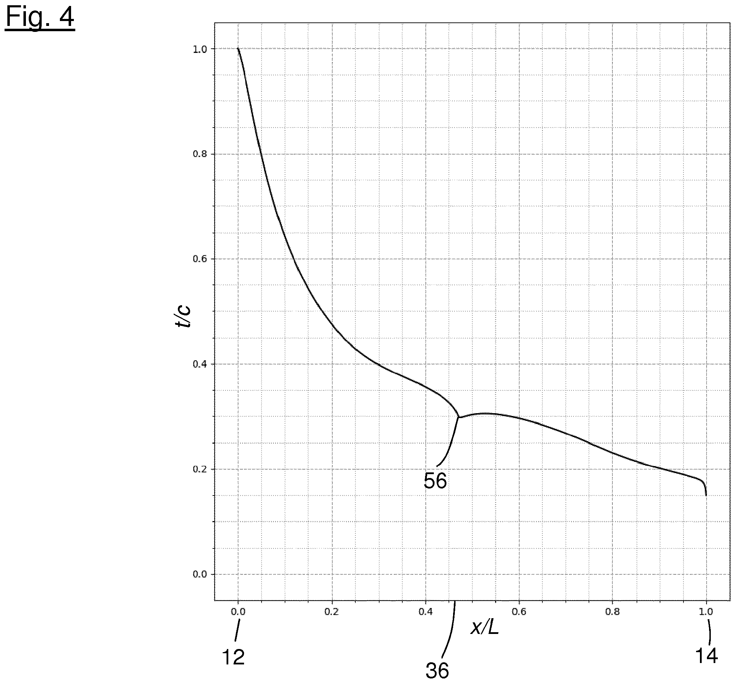

Figur 4 zeigt ein Diagramm zur relativen Profildicke *t*/*c,* ebenfalls aufgetragen über die Blattlänge *x*/*L. t* bezeichnet dabei die absolute Profildicke und c weiterhin die Profilsehnenlänge. Man erkennt, dass die relative Profildicke an der Blattwurzel 12, also bei *x*/*L =* 0,0, den Wert 1,0 aufweist, entsprechend dem dort kreisförmigen Querschnitt. Von dort nimmt die relative Profildicke *t*/*c* in Richtung zur Blattspitze 14 hin schnell ab, bis sie an der zweiten Radiusposition 36 ein lokales Minimum 56 aufweist.

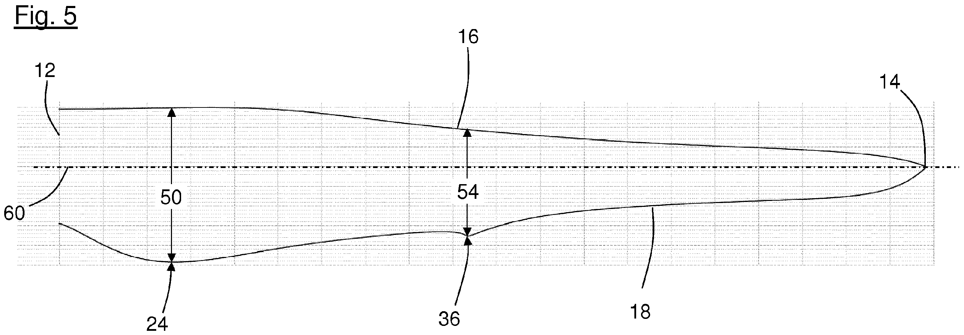

Figur 5 zeigt beispielhaft die Blattkontur des Windenergieanlagenrotorblatts 10 aus Figur 2 in einer nicht maßstäblichen Darstellung. Dargestellt sind die Verläufe der Profilnasenkante 16 und der Profilendkante 18 von der Blattwurzel 12 bis zur Blattspitze 14. Ebenfalls eingetragen ist eine Längsachse 60 des Windenergieanlagenrotorblatts, die in der Mitte der Blattwurzel 12 beginnt und einer Pitchachse entspricht. Der senkrecht zu der Längsachse 60 gemessene Abstand zwischen Profilnasenkante 16 und Profilendkante 18 ist die Profilsehnenlänge c. Gut erkennbar in der Figur 5 sind das globale Maximum 50 der Profilsehnenlänge c an der ersten Radiusposition 24 und das lokale Maximum 54 der Profilsehnenlänge c an der zweiten Radiusposition 36.

Figur 6 zeigt einen Querschnitt durch das Windenergieanlagenrotorblatt 10 aus Fig. 2 an der in Fig. 2 mit VI bezeichneten Position. Man erkennt das trunkierte aerodynamische Profil des Hauptteils 42 und dass sich daran bis zur Profilendkante 18 hin anschließende Anbauteil 44. Die Hinterkante 58 des Hauptteils 42 weist eine größere Höhe auf, als die von dem Anbauteil 44 gebildet Profilendkante 18.

Die Figuren 7 bis 9 zeigen weitere Querschnitte durch das Windenergieanlagenrotorblatt 10 aus Fig. 2 an den in Fig. 2 mit VII, VIII und IX bezeichneten Radiuspositionen. Man erkennt in jeder dieser Figuren die Zweiteilung des Querschnitts in Hauptteil 42 und Anbauteil 44. Außerdem ist deutlich erkennbar, dass die Höhe der Hinterkante 58 des Hauptteils 42 mit weiter zur Blattspitze 14 hin wandernder Radiusposition kontinuierlich abnimmt. Die Höhe der Profilendkante 18 nimmt von Figur 6 zu Figur 7 und dann weiter zu Figur 8 hin ab, wobei sie in der Figur 8, die der zweiten Radiusposition 36 entspricht, bereits als dünne Hinterkante ausgebildet ist. Ebenfalls erkennbar ist, dass die Profilsehnenlänge an der Position der Figur 8 ihr lokales Maximum erreicht und zur Figur 9 hin wieder abnimmt.

### List der verwendeten Bezugszeichen:

- 10: Windenergieanlagenrotorblatt
- 12: Blattwurzel
- 14: Blattspitze
- 16: Profilnasenkante
- 18: Profilendkante
- 20: Druckseite
- 22: Saugseite
- 24: erste Radiusposition
- 26: erster Längsabschnitt
- 28: zweiter Längsabschnitt
- 30: dicke Hinterkante
- 32: dünne Hinterkante
- 34: Übergangsbereich
- 36: zweite Radiusposition
- 38: dritte Radiusposition
- 40: punktierte Linie
- 42: Hauptteil
- 44: Anbauteil
- 46: erste Fläche des Hauptteils
- 48: erste Fläche des Anbauteils
- 50: globales Maximum der Profilsehnenlänge
- 52: lokales Minimum der Profilsehnenlänge
- 54: lokales Maximum der Profilsehnenlänge
- 56: lokales Minimum der relativen Profildicke
- 58: Hinterkante des Hauptteils
- 60: Längsachse

## Patentansprüche

1. Windenergieanlagenrotorblatt (10) mit einer Blattwurzel (12), einer Blattspitze (14), einer Profilnasenkante (16), einer Profilendkante (18), einer Druckseite (20) und einer Saugseite (22), wobei eine Profilsehnenlänge (c) des Windenergieanlagenrotorblatts (10) an einer ersten Radiusposition (24) ein globales Maximum (50) aufweist und die Profilendkante (18) in einem ersten Längsabschnitt (26) des Windenergieanlagenrotorblatts (10) als dicke Hinterkante (30) und in einem zweiten Längsabschnitt (28) des Windenergieanlagenrotorblatts (10) als dünne Hinterkante (32) ausgebildet ist, **dadurch gekennzeichnet, dass** die Profilsehnenlänge (c) in einem von der ersten Radiusposition (24) beabstandeten Übergangsbereich (34) zwischen dem ersten Längsabschnitt (26) und dem zweiten Längsabschnitt (28) ein lokales Maximum (54) aufweist.

2. Windenergieanlagenrotorblatt (10) nach Anspruch 1, **dadurch gekennzeichnet, dass** das Windenergieanlagenrotorblatt (10) an jeder Radiusposition innerhalb des Übergangsbereichs (34) ein aerodynamisches Profil aufweist.

3. Windenergieanlagenrotorblatt (10) nach Anspruch 1 oder 2, **dadurch gekennzeichnet, dass** die Profilendkante (18) in dem Übergangsbereich (34) einen geschwungenen Verlauf ohne Sprünge oder Knicke aufweist und sich glatt an die Profilendkante (18) des ersten Längsabschnitts (26) und glatt an die Profilendkante (18) des zweiten Längsabschnitts (28) anschließt.

4. Windenergieanlagenrotorblatt (10) nach einem der Ansprüche 1 bis 3, **dadurch gekennzeichnet, dass** die Profilsehnenlänge (c) zwischen dem globalen Maximum (50) und dem lokalen Maximum (54) ein lokales Minimum (52) aufweist, wobei die Profilsehnenlänge (c) an dem lokalen Maximum (54) mindestens 1 % größer ist als an dem lokalen Minimum (52).

5. Windenergieanlagenrotorblatt (10) nach einem der Ansprüche 1 bis 4, **dadurch gekennzeichnet, dass** eine Höhe der Profilendkante (18) in dem Übergangsbereich (34) in Richtung zu der Blattspitze (14) hin monoton abnimmt.

6. Windenergieanlagenrotorblatt (10) nach einem der Ansprüche 1 bis 5, **dadurch gekennzeichnet, dass** das lokale Maximum (54) der Profilsehnenlänge (c) an einer zweiten Radiusposition (36) erreicht wird.

7. Windenergieanlagenrotorblatt (10) nach Anspruch 6, **dadurch gekennzeichnet, dass** die zweite Radiusposition (36) in einer Mitte des Übergangsbereichs (34) angeordnet ist.

8. Windenergieanlagenrotorblatt (10) nach Anspruch 6 oder 7, **dadurch gekennzeichnet, dass** die zweite Radiusposition (36) in einem Bereich von 30 % bis 60 % der Blattlänge (L), betrachtet von der Blattwurzel (12) an, angeordnet ist.

9. Windenergieanlagenrotorblatt (10) nach einem der Ansprüche 6 bis 8, **dadurch gekennzeichnet, dass** die Profilendkante (18) an der zweiten Radiusposition (36) als dünne Hinterkante (32) ausgebildet ist.

10. Windenergieanlagenrotorblatt (10) nach einem der Ansprüche 1 bis 9, **dadurch gekennzeichnet, dass** die Profilendkante (18) in dem ersten Längsabschnitt (26) in Richtung der Profilhöhe im Wesentlichen geradlinig verläuft.

11. Windenergieanlagenrotorblatt (10) nach einem der Ansprüche 1 bis 10, **dadurch gekennzeichnet, dass** die Profilendkante (18) in dem Übergangsbereich eine Krümmung in Längsrichtung des Windenergieanlagenrotorblatts (10) aufweist, die dazu ausgebildet ist, eine Radialströmung, die entlang der Profilendkante (18) in Richtung zu der Blattspitze (14) hin strömt, in dem Übergangsbereich (34) in einen Profilnachlauf umzuleiten.

12. Windenergieanlagenrotorblatt (10) nach Anspruch 11, **dadurch gekennzeichnet, dass** die Krümmung der Profilendkante (18) die Profilendkante (18) des ersten Längsabschnitts (26) in Richtung zu der Blattspitze (12) hin glatt fortsetzt.

13. Windenergieanlagenrotorblatt (10) nach einem der Ansprüche 1 bis 12, **dadurch gekennzeichnet, dass** das Windenergieanlagenrotorblatt (10) ein Hauptteil (42) und ein Anbauteil (44) aufweist, das in dem Übergangsbereich (34) an dem Hauptteil (42) befestigt ist und dort die Profilendkante (18) bildet.

14. Windenergieanlagenrotorblatt (10) nach Anspruch 13, **dadurch gekennzeichnet, dass** eine erste Fläche (46) des Hauptteils (42) und eine erste Fläche (48) des Anbauteils (44) gemeinsam die Saugseite (22) bilden und/oder dass eine zweite Fläche des Hauptteils (42) und eine zweite Fläche des Anbauteils (44) gemeinsam die Druckseite (20) bilden.

15. Windenergieanlagenrotorblatt (10) nach Anspruch 14, **dadurch gekennzeichnet, dass** die erste Fläche (48) des Anbauteils (44) die erste Fläche (46) des Hauptteils (42) in Richtung zu der Profilendkante (18) hin glatt fortsetzt und/oder dass die zweite Fläche des Anbauteils (44) die zweite Fläche des Hauptteils (42) in Richtung zu der Profilendkante (18) hin glatt fortsetzt.
